# EUROPÄISCHE PATENTSCHRIFT

(11) **EP 1 365 187 B1**
(45) Veröffentlichungstag und Bekanntmachung des Hinweises auf die Patenterteilung: **07.03.2007**
(21) Anmeldenummer: 02011356.9
(22) Anmeldetag: 23.05.2002
(51) Int. Cl.: F16M 11/04

(54) **Stativkopf**
Support head
Tête de support

(43) Veröffentlichungstag der Anmeldung: 26.11.2003
(73) Patentinhaber: SWAROVSKI OPTIK KG, 6067 Absam i. Tirol (AT)
(72) Erfinder: Mayr, Werner, 6060 Hall (AT)
(74) Vertreter: Kador & Partner

(56) Entgegenhaltungen:
- DE-U- 8 716 995
- FR-A- 2 552 579
- US-A- 3 356 325
- US-A- 3 429 543
- US-A- 3 612 462
- US-A- 4 466 595

## Beschreibung

Die Erfindung bezieht sich auf einen Stativkopf zur Schnellfixierung einer an einem Gerät befestigten Anschlussplatte nach dem Oberbegriff des Anspruchs 1.

Ein derartiger Stativkopf ist aus US-A-3 612 462 bekannt. Der Klemmbacken ist dabei mit einem Druckstößel in die Offenstellung belastet und weist eine V-förmige Ausnehmung auf, in die ein Riegel eingreift, der durch eine mit einem Drehknopf versehene Gewindestange betätigt wird. Der bekannte Stativkopf ist nur beidhändig bedienbar, d.h. das optische Gerät, also beispielsweise eine Kamera oder ein Teleskop, muss mit der einen Hand gehalten werden, während mit der anderen Hand der Drehknopf gedreht wird.

Nach US-A-3 356 325 ist an der Unterseite der Anschlussplatte eine sich nach unten konisch erweiternde Scheibe vorgesehen, die mit einer Seite in die Nut an dem Stativkopf gesteckt wird, während die Klemmbacke durch eine in Schließstellung federbelastete, mit einem Handgriff in die Offenstellung verschwenkbare Nockenscheibe gebildet wird.

Auch diese Schnellfixierung ist nur beidhändig bedienbar. Das heißt, das optische Gerät muss mit der einen Hand gehalten werden, während mit der anderen Hand die Nockenscheibe zurückgedreht wird. Zudem kann durch Schmutz zwischen der Nockenscheibe und der konischen Scheibe an der Unterseite der Anschlussplatte die Drehung der Nockenscheibe behindert werden, was zu einer unvollständigen Klemmung der konischen Scheibe und damit einer mangelnden Fixierung insbesondere schwerer optischer Geräte führt.

Aufgabe der Erfindung ist es, eine einhändig bedienbare Vorrichtung zur raschen und sicheren Befestigung auch schwerer Geräte auf einem Stativ bereitzustellen.

Dies wird erfindungsgemäß mit der im Anspruch 1 gekennzeichneten Stativkopf erreicht.

Erfindungsgemäß braucht damit zur Schnellfixierung nur das Gerät mit einer Hand gehalten und gegen den federbelasteten Schieber gedrückt zu werden. Die zweite Hand wird also zur Schnellfixierung nicht benötigt. Der Schieber kann dabei durch eine Leiste, einen Bolzen oder dergleichen gebildet sein, der verschiebbar ist.

Wie die eine starre Nut auf der Oberseite des Stativkopfes weist auch der kippbare Klemmbacken vorzugsweise eine Nut auf, die bei nach innen gekipptem Klemmbacken die betreffende Anschlußplattenseite übergreift.

Zum Einstecken in die eine Nut bzw. zum Übergreifen durch die Nut in dem Klemmbacken weist die vorzugsweise rechteckig ausgebildete Anschlußplatte an den betreffenden einander gegenüberliegenden Seiten vorzugsweise jeweils einen Fuß auf, der sich an seiner Außenseite nach unten schräg nach außen erstreckt. Dadurch wird durch breite Auflagefläche ein sicherer Halt der Anschlußplatte in den beiden Nuten gewährleistet.

Zum Kippen des Klemmbacken auf die Anschlußplatte bzw. deren einen Fuß ist eine schräge Stützfläche an dem Stativkopf vorgesehen, an der der Klemmbacken mit seiner Außenseite anliegt, wenn der Schieber bewegt wird.

Damit der Schieber soweit verschoben wird, daß der Klemmbacken die Anschlußplatte bzw. deren Fuß festklemmt, ist in dem Schieber eine schräg verlaufende Nut oder dergleichen Ausnehmung vorgesehen, in die der Riegel mit einer Nase oder dergleichen Angriffsabschnitt unter Verschiebung des Schiebers von der Anschlußplatte weg eingreift.

Vorzugsweise weist die Ausnehmung zwei parallele schräge Flächen auf, an denen die Nase oder dergleichen Angriffsabschnitt des Riegels mit zwei dazu parallelen schrägen Flächen angreift.

Diese Schrägflächen sind vorzugsweise so ausgebildet, daß Selbstklemmung herrscht und damit ein selbsttätiges Öffnen der Schnellfixierung verhindert ist.

Zur Betätigung des Riegels ist vorzugsweise ein zweiarmiger Hebel vorgesehen, dessen einer Hebelarm als Handgriff ausgebildet ist, während der zweite Hebelarm an einer mit dem Riegel verbundenen Stange angelenkt ist.

Damit wird ein großes Übersetzungsverhältnis zwischen dem Handgriff und dem Riegel gebildet, wodurch der Riegel mit einer hohen Federkraft an dem Schieber angreifen kann, so daß eine hohe Klemmkraft auf die Anschlußplatte einwirkt.

Der Handgriff wird vorzugsweise in der Schließstellung der Schnellfixierung an den Stativkopf geklappt, um geringe Sperrmaße zu erhalten.

Statt des Handgriffs oder Betätigungshebels kann auch eine andere Handhabe, beispielsweise ein Druckknopf vorgesehen sein, um den Riegel zu betätigen.

An der Nut, in die die Anschlußplatte bzw. deren Fuß steckbar ist, sind Flanken zur Führung der Anschlußplatte vorgesehen. Damit wird zugleich ein sicherer Halt in alle Richtungen durch Formschluß gebildet.

Der Schieber, der Riegel, die zur Federbelastung des Schiebers und des Riegels vorgesehenen Federn und die mit dem Bedienhebel verbundene Stange sind vorzugsweise platzsparend und funktionssicher innerhalb des Stativkopfgehäuses unterhalb der Anschlussplatte angeordnet.

Nachstehend ist eine Ausführungsform der erfindungsgemäßen Vorrichtung anhand der Zeichnung beispielhaft näher erläutert. Darin zeigen:
Figur 1 eine perspektivische Ansicht eines Stativkopfes;
Figur 2 und 3 einen Schnitt durch den Stativkopf entlang der Linie II/III in Figur 1 mit Anschlußplatte in geöffneter bzw. Schließstellung; und
Figur 4 eine Draufsicht auf den Stativkopf mit teilweise weggebrochenen Teilen.

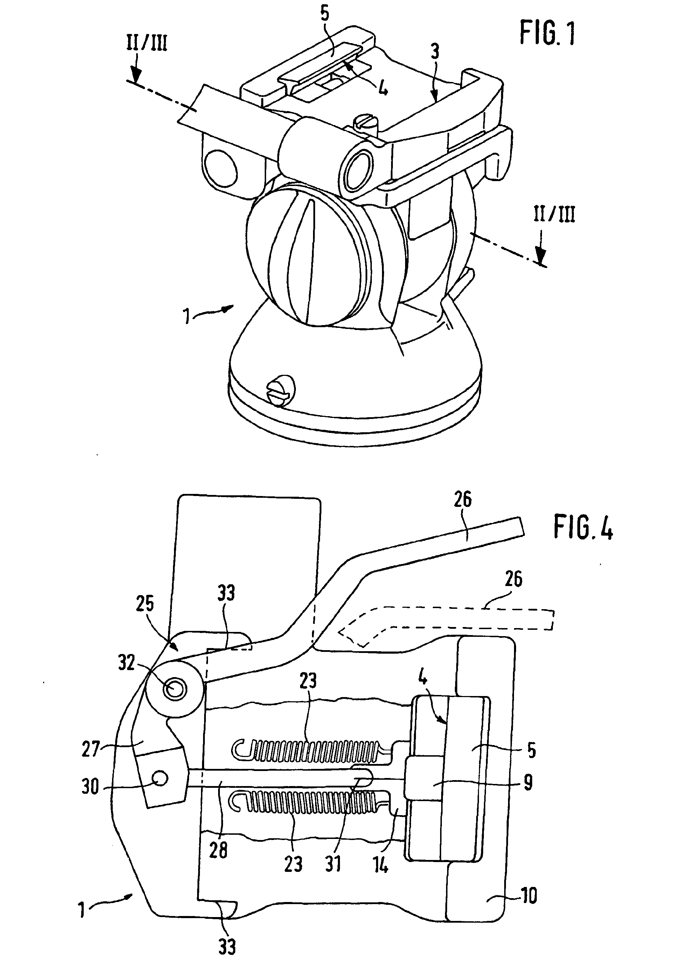

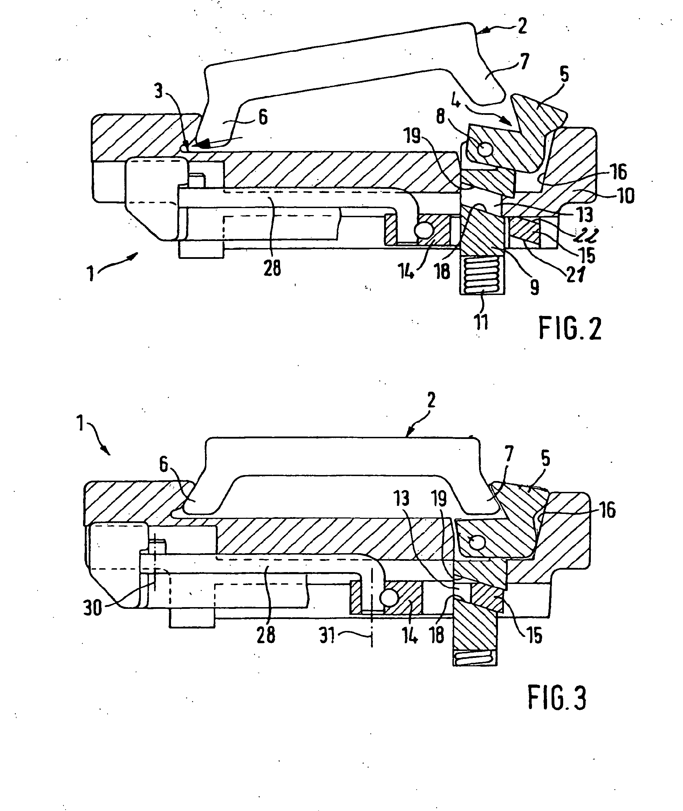

Gemäß Figur 1 bis 3 ist ein um eine horizontale und eine vertikale Achse verschwenkbar, in der eingestellten Schwenk- und Kippposition fixierbarer Stativkopf 1 auf einem nicht-dargestellten Stativ zur Schnellfixierung einer Anschlussplatte 2 ausgebildet, auf der das nicht-dargestellte Gerät, beispielsweise ein Teleskop oder eine Kamera, befestigt ist.

Der Stativkopf 1 weist an seiner Oberseite auf einer Seite der Anschlußplatte 2 eine Nut 3 und auf der anderen Seite der Anschlußplatte 2 eine zweite Nut 4 auf. Während die Nut 3 starr auf dem Stativkopf 1 ausgebildet ist, ist die Nut 4 an der Innenseite eines Klemmbackens 5 vorgesehen.

Zum Einstecken in die eine Nut 3 bzw. zum Übergreifen durch die Nut 4 in den Klemmbacken 5 weist die rechteckige Anschlußplatte 2 an den betreffenden, einander gegenüberliegenden Seiten vorzugsweise jeweils einen Fuß 6, 7 auf, der sich an der Außenseite nach unten schräg nach außen erstreckt.

Der Klemmbacken 5 ist um eine waagrechte, das heißt zur Ebene der Anschlußplatte 2 parallele Achse 8 kippbar an einem Schieber 9 befestigt.

Der beispielsweise als Leiste ausgebildete Schieber 9 ist im Inneren eines Gehäuses 10 des Stativkopfes 1 verschiebbar geführt. Eine Druckfeder 11 belastet den Schieber 9.

Der Schieber 9 weist eine Nut oder dergleichen Ausnehmung 13 auf, in die ein zum Beispiel als Leiste ausgebildeter Riegel 14 mit einer Nase oder dergleichen Eingriffsabschnitt 15 eingreift, wenn der Schieber 9 mit der Anschlußplatte 2 soweit bewegt worden ist, daß der Klemmbacken 5 auf den Fuß 7 gekippt ist, um die Anschlußplatte 2 zu verriegeln.

Zum Kippen des Klemmbacken 5 auf den Fuß 7 ist eine schräge Stützfläche 16 an dem Stativkopf 1 vorgesehen. An der Stützfläche 16 liegt der Klemmbacken 5 mit seiner Außenseite an, wenn der Schieber 9 durch den Druck der zu fixierenden Anschlußplatte 2 bewegt wird.

Damit der Schieber 9 soweit verschoben wird, daß der Klemmbacken 5 den Fuß 7 festklemmt, weist die Nut oder dergleichen Ausnehmung 13 in dem Schieber zwei parallele Schrägflächen 18, 19 auf, in die der Riegel 14 mit seinem Eingriffsabschnitt 15 mit nahezu parallelen Schrägflächen 21, 22 eingreift.

Die Schrägflächen 18, 19 und 21, 22 sind vorzugsweise so ausgebildet, daß Selbsthemmung herrscht und damit ein selbsttätiges Öffnen der Schnellfixierung verhindert ist.

Der in dem Gehäuse 10 des Stativkopfes 1 verschiebbar gelagerte Riegel 14 greift dabei mit seinem Eingriffsabschnitt 15 an der Seite des Schiebers 9 an, die der starren Nut 3 an der Oberseite des Stativkopfes 1 gegenüber liegt. Gemäß Figur 4 wird der Riegel 14 durch zwei Zugfedern 23 in die Verriegelungsstellung belastet.

Um den Riegel 14 zu betätigen, ist gemäß Figur 4 ein zweiarmiger Hebel 25 in dem Stativkopfgehäuse 10 gelagert, dessen einer Arm einen Bedienungshebel 26 bildet, während der andere, kurze Hebelarm 27 an einer Stange 28 angelenkt ist, die an dem Riegel 14 gelenkig angreift. Die Gelenkachsen 30, 31 der Stange 28 verlaufen parallel zur Hebelachse 32. Wie in Figur 4 gestrichelt dargestellt, ist der Bedienungshebel 26 in der Schließstellung bei verriegeltem Schieber 9 an das Stativkopfgehäuse 10 geklappt.

An der starren Nut 3 sind an beiden Enden Flanken 33 zur Führung der Anschlußplatte 2 vorgesehen.

## Patentansprüche

1. Stativkopf (1) zur Schnellfixierung an einer an einem Gerät befestigten Anschlussplatte (2), der an der Oberseite eine Nut (3), in die die Anschlussplatte (2) mit einer Seite steckbar ist, und einen Klemmbacken (5) aufweist, welcher die gegenüberliegende Seite der Anschlussplatte (2) in der Schließstellung übergreift, um eine zur Anschlussplattenebene parallele Achse (8) kippbar ist und durch einen federbelasteten Riegel (14) in der Schließstellung verriegelbar ist, der in eine Ausnehmung (13) eingreift, **dadurch gekennzeichnet, dass** der Klemmbacken (5) an einem Schieber (9) befestigt ist, der durch Druck mit der Anschlussplatte (2) entgegen einer Federkraft verschiebbar ist und der die Ausnehmung (13) aufweist, in die der Riegel (14) eingreift, wobei der Klemmbacken (5) bei Verschiebung des Schiebers (9) in die verriegelte Stellung durch eine Stützfläche (16) am Stativkopf (1) auf die Anschlussplatte (2) kippbar ausgebildet ist.

2. Stativkopf nach Anspruch 1, **dadurch gekennzeichnet, dass** der Schieber (9), bezogen auf die fixierte Anschlussplatte (2), senkrecht zur Anschlussplattenebene verschiebbar ausgebildet ist.

3. Stativkopf nach Anspruch 1, **dadurch gekennzeichnet, dass** der Klemmbacken (5) eine Nut (4) zum Übergreifen der Anschlussplatte aufweist.

4. Stativkopf nach einem der vorstehenden Ansprüche, **dadurch gekennzeichnet, dass** der Schieber (9) eine Schrägfläche (18) aufweist, an der der Riegel (14) beim Verriegeln mit einem Angriffsabschnitt (15) mit einer parallelen schrägen Fläche (21) angreift.

5. Stativkopf nach Anspruch 4, **dadurch gekennzeichnet, dass** der Schieber (9) eine Ausnehmung (13) mit zwei parallelen Schrägflächen (18, 19) aufweist, an denen der Angriffsabschnitt (15) des Riegels (14) mit zwei dazu parallelen schrägen Flächen (21, 22) angreift.

6. Stativkopf nach Anspruch 4 oder 5, **dadurch gekennzeichnet, dass** die Schrägflächen (18, 19, 21, 22) selbsthemmend ausgebildet sind.

7. Stativkopf nach einem der vorstehenden Ansprüche, **dadurch gekennzeichnet, dass** der Angriffsabschnitt (15) des Riegels (14) von der Nut (3) des Stativkopfes (1) gegenüberliegenden Seite an dem Schieber (9) angreift.

8. Stativkopf nach Anspruch 7, **dadurch gekennzeichnet, dass** der Riegel (14) durch wenigstens eine Zugfeder (23) in die Verriegelungsstellung belastet ist.

9. Stativkopf nach einem der vorstehenden Ansprüche, **dadurch gekennzeichnet, dass** der Riegel (14) durch einen Druckknopf oder dergleichen Handhabe entgegen der ihn belastenden Federkraft in seine Außereingriffsstellung bewegbar ist.

10. Stativkopf nach Anspruch 9, **dadurch gekennzeichnet, dass** die Handhabe durch den einen Arm (26) eines zweiarmigen Hebels (25) gebildet wird, dessen zweiter Hebelarm (27) über ein Gestänge (28) an dem Riegel (14) angreift.

11. Stativkopf nach Anspruch 10, **dadurch gekennzeichnet, dass** der als Bedienungshebel (26) ausgebildete eine Hebelarm in der Schließstellung bei verriegeltem Schieber (9) an das Stativkopfgehäuse (10) geklappt ist.

12. Stativkopf nach einem der vorstehenden Ansprüche, **dadurch gekennzeichnet, dass** an der Nut (3), in die die Anschlussplatte (2) steckbar ist, Flanken (33) zur Führung der Anschlussplatte (2) vorgesehen sind.

## Claims

1. A tripod head (1) for quick fixation to a connection plate (2) fastened to a device, said tripod head having on the upper side a groove (3) into which the connection plate (2) is insertable with one side, and a clamping jaw (5) that engages over the opposite side of the connection plate (2) in the closed position, is tiltable about an axle (8) parallel to the connection plate plane and is lockable in the closed position by a spring-loaded bolt (14) which engages a recess (13), **characterized in that** the clamping jaw (5) is fastened to a slider (9) which is displaceable by pressure with the connection plate (2) against a spring force and which has the recess (13) engaged by the bolt (14), the clamping jaw (5) being formed to be tiltable onto the connection plate (2) when the slider (9) is displaced into the locked position by a support surface (16) on the tripod head (1).

2. The tripod head according to claim 1, **characterized in that** the slider (9) is formed to be displaceable perpendicular to the connection plate plane relative to the fixed connection plate (2).

3. The tripod head according to claim 1, **characterized in that** the clamping jaw (5) has a groove (4) for engaging over the connection plate.

4. The tripod head according to any of the above claims, **characterized in that** the slider (9) has an oblique surface (18) which the bolt (14) acts upon when locking with an engaging portion (15) with a parallel oblique surface (21).

5. The tripod head according to claim 4, **characterized in that** the slider (9) has a recess (13) with two parallel oblique surfaces (18, 19) which the engaging portion (15) of the bolt (14) acts upon with two oblique surfaces (21, 22) parallel thereto.

6. The tripod head according to claim 4 or 5, **characterized in that** the oblique surfaces (18, 19, 21, 22) are formed to be self-locking.

7. The tripod head according to any of the above claims, **characterized in that** the engaging portion (15) of the bolt (14) engages the slider (9) from the side opposite the groove (3) of the tripod head (1).

8. The tripod head according to claim 7, **characterized in that** the bolt (14) is loaded in the locked position by at least one extension spring (23).

9. The tripod head according to any of the above claims, **characterized in that** the bolt (14) is movable into its disengaged position against the spring force loading it by a push-button or similar handling means.

10. The tripod head according to claim 9, **characterized in that** the handling means is formed by one arm (26) of a two-armed lever (25) whose second arm (27) acts upon the bolt (14) via a rod system (28).

11. The tripod head according to claim 10, **characterized in that** the one lever arm formed as an operating lever (26) is folded against the tripod head housing (10) in the closed position when the slider (9) is locked.

12. The tripod head according to any of the above claims, **characterized in that** flanks (33) for guiding the connection plate (2) are provided on the groove (3) into which the connection plate (2) is insertable.

## Revendications

1. Tête de statif (1) pour la fixation rapide d'une plaque d'accouplement (2) fixée sur un appareil, comprenant, à sa face supérieure, une rainure (3) dans laquelle peut s'emboîter un côté de la plaque d'accouplement (2), et une mâchoire de serrage (5) qui enserre le côté opposé de la plaque d'accouplement (2) par le dessus, dans la position de fermeture, qui peut pivoter autour d'un axe (8) parallèle au plan de la plaque d'accouplement, et qui peut être verrouillée dans la position de fermeture au moyen d'un verrou (14) précontraint par ressort, le verrou s'engageant dans un évidement (13),
**caractérisée en ce que** la mâchoire de serrage (5) est fixée sur un coulisseau (9) qui peut être déplacé, sous l'action d'une pression, conjointement avec la plaque d'accouplement (2), à l'encontre d'une force de ressort, et qui comporte l'évidement (13) dans lequel s'engage le verrou (14), la mâchoire de serrage (5) étant configurée de manière à pouvoir pivoter pour se rabattre sur la plaque d'accouplement (2) lorsque le coulisseau (9) est amené dans la position de verrouillage, grâce à une surface d'appui (16) aménagée sur la tête de support (1).

2. Tête de statif selon la revendication 1, **caractérisée en ce que** le coulisseau (9) est configuré de manière à pouvoir coulisser perpendiculairement au plan de la plaque d'accouplement, vu par rapport à la plaque d'accouplement fixée (2).

3. Tête de statif selon la revendication 1, **caractérisée en ce que** la mâchoire de serrage (5) comporte une rainure (4) conçue pour enserrer la plaque d'accouplement par le dessus.

4. Tête de statif selon l'une des revendications précédentes, **caractérisée en ce que** le coulisseau (9) comporte un plan incliné (18) sur lequel s'engage le verrou (14) lors du verrouillage, par l'intermédiaire d'une section d'attaque (15) présentant un plan incliné parallèle (21).

5. Tête de statif selon la revendication 4, **caractérisée en ce que** le coulisseau (9) comporte un évidement (13) présentant deux plans inclinés parallèles (18, 19), entre lesquelles s'engage la section d'attaque (15) du verrou (14) par l'intermédiaire de deux plans inclinés conjugués (21, 22) parallèles aux premiers.

6. Tête de statif selon la revendication 4 ou 5, **caractérisée en ce que** les plans inclinés (18, 19, 21, 22) sont configurés pour être autobloquants.

7. Tête de statif selon l'une des revendications précédentes, **caractérisée en ce que** la section d'attaque (15) du verrou (14) entre en prise avec le coulisseau (9) depuis le côté opposé à la rainure (3) de la tête de support (1).

8. Tête de statif selon la revendication 7, **caractérisée en ce que** le verrou (14) est précontraint en direction de la position de verrouillage par au moins un ressort de traction (23).

9. Tête de statif selon l'une des revendications précédentes, **caractérisée en ce que** le verrou (14) peut être amené dans sa position de désengagement, à l'encontre de la force de ressort agissant sur celui-ci, par l'intermédiaire d'un bouton poussoir ou autre dispositif de manipulation similaire.

10. Tête de statif selon la revendication 9, **caractérisée en ce que** le dispositif de manipulation est constitué par un bras (26) d'un levier à deux bras (25) dont le second bras de levier (27) est en prise avec le verrou (14) par l'intermédiaire d'une tringlerie (28).

11. Tête de statif selon la revendication 10, **caractérisée en ce que** ledit un bras de levier, qui est réalisé sous forme d'un levier de commande (26), est rabattu sur le boîtier (10) de la tête de support, lorsqu'il se trouve en position de fermeture, verrouillant le coulisseau (9).

12. Tête de statif selon l'une des revendications précédentes, **caractérisée en ce que** des flancs (33) assurant le guidage de la plaque d'accouplement (2) sont prévus au niveau de la rainure (3) dans laquelle peut s'emboîter la plaque d'accouplement (2).
